# EUROPÄISCHE PATENTANMELDUNG

(11) **EP 0 980 166 A1**
(43) Veröffentlichungstag der Anmeldung: **16.02.2000**
(21) Anmeldenummer: 98114799.4
(22) Anmeldetag: 06.08.1998
(51) Int. Cl.: H04L 12/403, G05B 19/418

(54) **Aktives Publishing**

(71) Anmelder: SIEMENS AKTIENGESELLSCHAFT, 80333 München (DE)
(72) Erfinder: Steindl, Günter, Dipl.-Ing. (FH), 92284 Trasslberg (DE)

(57) **Zusammenfassung**

Kommunikationsverfahren zum Einsatz in Verbindung mit einem dezentralen, bei der Automatisierung technischer Prozesse einsetzbaren Bussystem (B), an das mehrere Kommunikationsteilnebmer, darunter mindestens zwei Master (M1, M2) sowie mindestens ein Slave (S1), angeschlossen sind, wobei jeder Master (M1, M2) jeweils einem Mastersystem (MS1, MS2) zugeordnet ist, wobei das Mastersystem (MS1, MS2) keine physikalische Entsprechung hat, sondern lediglich die Möglich- bzw. Unmöglichkeit bestimmter Kommunikationsbeziehungen zwischen den an das Bussystem (B) angeschlossenen Kommunikationsteilnehmern (M1, M2, S1) festlegt, wobei zumindest der Slave (S1) jedes über den Bus (B) übermittelte Telegramm erkennt und zumindest bestimmte Daten des Telegrammkopfes auswertet und bei Übereinstimmung mit in einer Filtertabelle gespeicherten Eintragungen, die Daten des Telegramms seiner Applikation zur Verfügung stellt, wobei ein Datentransfer zu einem Slaves (S1) eines ersten Mastersystems (MS1) ausgehend von einem Master (M2) eines entfernten Mastersystems (MS2) dadurch erfolgt, daß die Daten des Telegrammkopfes geeignet sind, die Filtertabelle des Slaves (S1) zu passieren.

## Beschreibung

Die Erfindung betrifft ein Kommunikations- bzw. Datenaustauschverfahren zum Einsatz in Verbindung mit einem dezentralen, bei der Automatisierung technischer Prozesse einsetzbaren Bussystem, insbesondere einem Feldbus, an das mehrere Kommunikationsteilnehmer, darunter mindestens zwei Master sowie mindestens ein Slave, angeschlossen sind, wobei jeder jeweils einem Mastersystem zugeordnet ist, wobei das Mastersystem keine physikalische Entsprechung hat, sondern lediglich die Möglich- bzw. Unmöglichkeit bestimmter Kommunikationsbeziehungen zwischen den an das Bussystem angeschlossenen Kommunikationsteilnehmern festlegt, wobei zumindest der Slave jedes über den Bus übermittelte Telegramm erkennt und zumindest bestimmte Daten des Telegrammkopfes auswertet und bei Übereinstimmung mit in einer Filtertabelle gespeicherten Eintragungen, die Daten des Telegramms seiner Applikation zur Verfügung stellt.

Ein Kommunikations- bzw. Datenaustauschverfahren, das die Kommunikation zwischen den an den Feldbus angeschlossenen Teilnehmern verbessert, ist z.B. der sogenannte Querverkehr, bei dem z.B. Daten zwischen sogenannten passiven Kommunikationsstationen, im folgenden "Slaves", direkt austauschbar sind, obwohl gemäß dem für den Feldbus definierten Kommunikationsprotokoll keine direkte Kommunikationsbeziehung zwischen solchen passiven Kommunikationsteilnehmern herstellbar ist und bisher die Kommunikation immer unter Zwischenschaltung eines sogenannten aktiven Kommunikationsteilnehmers, im folgenden "Master", erfolgen mußte, indem eine Kommunikationsbeziehung zwischen dem ersten passiven Kommunikationsteilnehmner und einem solchen Master etabliert wird und die Daten an den Master transferiert werden, woraufhin der Master eine Kommunikationsbeziehung zu dem zweiten passiven Kommunikationsteilnehmer herstellt und die Daten somit schließlich an den zweiten passiven Kommunikationsteilnehmer, den eigentlichen Empfänger, gelangen.

Ein aktiver Kommunikationsteilnehmer, ein Master, ist ein Kommunikationsteilnehmer in einem Bussystem, der selbständig einen Kommunikationsvorgang einleiten kann, wohingegen ein passiver Kommunikationsteilnehmer, ein Slave, ein Kommunikationsteilnehmer ist, der, um Daten auf den Bus zu geben, immer einen Stimulus von außen benötigt, z.B. eine Sendeanforderung von einem Master.

Die Aufgabe der vorliegenden Erfindung besteht darin, unter Ausnutzung der Möglichkeiten des Querverkehrs die Kommunikation in einem Feldbussystem und zwischen den an das Feldbussystem angeschlossenen Kommunikationsteilnehmern noch optimaler zu gestalten.

Diese Aufgabe wird mit einem Kommunikationsverfahren zum Einsatz in Verbindung mit einem dezentralen, bei der Automatisierung technischer Prozesse einsetzbaren Bussystem, an das mehrere Kommunikationsteilnehmer, darunter mindestens zwei Master sowie mindestens ein Slave, angeschlossen sind, wobei jeder Master jeweils einem Mastersystem zugeordnet ist, wobei das Mastersystem keine physikalische Entsprechung hat, sondern lediglich die Möglich- bzw. Unmöglichkeit bestimmter Kommunikationsbeziehungen zwischen den an das Bussystem angeschlossenen Kommunikationsteilnehmern festlegt, wobei zumindest der Slave jedes über den Bus übermittelte Telegramm erkennt und zumindest bestimmte Daten des Telegrammkopfes auswertet und bei Übereinstimmung mit in einer Filtertabelle gespeicherten Eintragungen, die Daten des Telegramms seiner Applikation zur Verfügung stellt, dadurch gelöst, daß ein Datentransfer zu einem Slave eines ersten Mastersystems ausgehend von einem Master eines entfernten Mastersystems dadurch erfolgt, daß die Daten des Telegrammkopfes geeignet sind, die Filtertabelle des Slaves zu passieren.

Eine vorteilhafte Ausgestaltung des erfindungsgemäßen Kommunikationsverfahrens besteht darin, daß das vom Master gesendete Telegramm sich für den Slave zumindest in bezug auf den Telegrammkopf nicht von einem im Rahmen des sog. Querverkehrs versandten Telegramms eines Kommunikationsteilnehmers des gleichen Mastersystems unterscheidet.

Eine derartige Ausgestaltung ist nochmals dahingehend erweiterbar, daß das vom Master gesendete Telegramm durch eine interne Kennung als "Response" kenntlich gemacht wird, so daß sich das vom Master des Mastersystems abgesetzte Telegramm für den Slave des Mastersystems als Querverkehrs-Telegramm darstellt, das durch einen Stimulus des eigenen Masters ausgelöst sein könnte.

Weitere Merkmale, Vorteile und Anwendungsmöglichkeiten der Erfindung ergeben sich aus den Unteransprüchen, der nachfolgenden Beschreibung eines Ausführungsbeispiels, anhand der Figuren und der Figuren selbst. Dabei bilden alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung.

Dabei zeigen
- FIG 1: eine einfache Bustopologie,
- FIG 2: eine Kennzeichnung der am Bus etablierten Mastersysteme und
- FIG 3a, 3b, 4a, 4b: die Telegrammstruktur und das Layout der Filtertabelle im Rahmen des Querverkehrs.

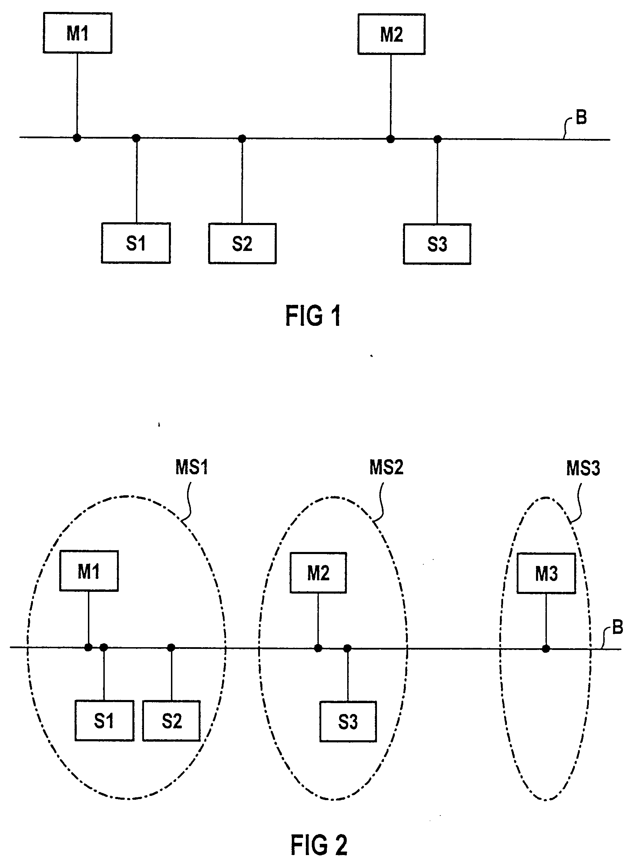

FIG 1 zeigt eine Bustopologie mit einem Bussystem B und an das Bussystem B angeschlossenen Kommunikationsteilnehmern, wobei als Kommunikationsteilnehmer exemplarisch zwei Master M1, M2 und drei Slaves S1, S2, S3 dargestellt sind. An das Bussystem B können selbstverständlich mehr als die in FIG 1 dargestellten Master bzw. Slaves angeschlossen werden.

Beim bereits bekannten Querverkehr, dessen Vorteile und Möglichkeiten in der noch nicht veröffentlichten europäischen Patentanmeldung 97102093.8 (Anmeldedatum: 10.02.97) beschrieben sind, ist eine Kommunikationsbeziehung in der Form etablierbar, daß von einem aktiven Kommunikationsteilnehmer, z.B. dem Master M1, eine Sendeanforderung an zumindest einen der Slaves, z.B. den Slave S1, geschickt wird. Der Slave S1 reagiert, indem er die angeforderten Daten in Form eines Telegramms auf den Bus B legt. Die auf den Bus gelegten Daten weisen dabei z.B. im Kopf des Telegramms eine Kennung auf, die den Slave S1 als Sender aufweist und eine weitere Kennung, die z.B. den Master M1 als Empfänger ausweist. Die weiteren an das Bussystem angeschlossenen Kommunikationsteilnehmer, insbesondere die Slaves S2, S3, hören den Verkehr auf dem Bus B mit und registrieren dabei insbesondere das Telegramm vom Slave S1 an den Master M1. Um am Querverkehr teilnehmen zu können, weisen die Kommunikationsteilnehmer eine Filtertabelle auf, in der hinterlegt ist, welche über den Bus laufende Telegramme der Querverkehrsteilnehmer registrieren soll, auch wenn sie bezüglich der Zieladresse nicht direkt an diesen Teilnehmer gerichtet sind. Wenn also für den Slave S3 in dessen Filtertabelle ein Eintrag in der Form "Sender: S1, Empfänger: M1" gespeichert ist, übernimmt der Slave S3 Telegramme mit dieser Kennung und stellt sie seinen Applikationen zur Verfügung. Auf diese Weise wird der Weg über einen Master M1 eingespart, denn die Daten, die mittels des Querverkehrs direkt beim Slave S3 gelandet sind, hätten ansonsten vom Slave S1 den Master M1 und von diesem an den Slave S3 übermittelt werden müssen.

Bei einer alternativen Form des Querverkehrs wird vom Master, z.B. wiederum vom Master M1, eine Sendeanforderung an zumindest einen der Slaves, z.B. wiederum den Slave S1, geschickt, woraufhin der Slave S1 reagiert, indem er die angeforderten Daten auf den Bus legt und diesmal mit einer Kennung, die zwar den Slave S1 noch als Sender identifiziert, als Empfänger aber eine Kennung aufweist, die bewirkt, daß sich das Telegramm an sämtliche beteiligten Kommunikationsteilnehmer richtet. Ein derartiges Senden bezeichnet man auch als "Publishing"; im folgenden wird also immer dann, wenn ein Sender ein Telegramm, das "an alle" gerichtet ist, auf den Bus legt, dieses als Publishing bezeichnet. Sämtliche Kommunikationsteilnehmer, die das vom Slave S1 "gepublishte" Telegramm empfangen, werten die empfangenen Daten anhand der bereits beschriebenen speziell für den jeweiligen Kommunikationsteilnehmer projektierten Filtertabelle aus und stellen sie gegebenenfalls ihrer jeweiligen Applikation zur Verfügung. Die Filtertabelle als solche entspricht dabei im wesentlichen der bereits beschriebenen Filtertabelle, wobei der Unterschied darin besteht, daß nicht mehr eindeutig gerichtete Sendungen, z.B. ausgehend vom Slave S1, gerichtet an den Master M1, überwacht werden, sondern daß "gepublishte" Sendungen überwacht werden, die anhand der Kennung "an alle" als Publishing und darüber hinaus anhand der Ursprungskennung identifizierbar sind.

Die Filtertabelle ist damit theoretisch auf die Ursprungskennung reduzierbar (auch wenn praktisch durchaus vorgesehen sein kann, zusätzlich auch noch den Service Access Point in die Filterung einzubeziehen) da die Zielkennung ja für jedes Publishing identisch ist. Textuell ausformuliert bewirkt eine solche Filtertabelle, daß für jeden passiven Kommunikationsteilnehmer vereinbart ist, daß die Publishings bestimmter anderer Slaves empfangen und ausgewertet werden. Gemäß dem Beispiel könnte also vorgegeben werden, daß durch den Slave S3 die Publishings der Slaves S1 und S2 empfangen und ausgewertet werden, daß durch den Kommunikationsteilnehmer S2 die Publishings der Kommunikationsteilnehmer S1 und S3 und durch den Kommunikationsteilnehmer S1 die Publishings der Kommunikationsteilnehmer S2 und S3 empfangen und ausgewertet werden.

Zwischen den jeweiligen Kommunikationsteilnehmern und damit insbesondere zwischen den aktiven Kommunikationsteilnehmern und den diesen zugeordneten passiven Kommunikationsteilnehmern besteht eine Beziehung, die sich durch die Projektierung ergibt. Diese Beziehung wird im folgenden als Mastersystem bezeichnet, weil an der projektierten Beziehung immer zumindest ein Master beteiligt ist.

Gemäß FIG 2 sind an dem Bussystem B drei Mastersysteme MS1, MS2, MS3 etabliert, wobei das Mastersystem MS1 aus dem Master M1 und den Slaves S1 und S2 gebildet wird, analog umfaßt das Mastersystem MS2 die Kommunikationsteilnehmer M2, S3 und das Mastersystem MS3 den Kommunikationsteilnehmer M3.

Kommunikationsbeziehungen ausgehend von einem Teilnehmer eines ersten Mastersystems, z.B. MS1, mit einem Teilnehmer eines zweiten Mastersystems, z.B. MS2, sind gemäß der grundsätzlich zugrunde liegenden Norm EN 50170 Part II nicht vorgesehen. Dies ist einerseits dadurch bedingt, als durch die Projektierung z.B. des ersten Mastersystems MS1 die Teilnehmeradressen der Mitglieder des Mastersystems MS2 nicht bekannt und folglich bei einem Kommunikationsvorgang ausgehend von einem Mitglied des ersten Mastersystems MS1 auch nicht verwendbar sind. Ferner bewirkt die projektierte Kommunikationsbeziehung zwischen einem Master eines Mastersystems und den diesem zugeordneten Slaves, daß ein Empfänger einer Nachricht von einem entfernten Mastersystem erkennt, daß diese Nachricht nicht zu der für das Mastersystem projektierten Kommunikationsbeziehung gehört. Das führt dazu, daß die empfangene Nachricht abgewiesen und damit nicht registriert bzw. ausgewertet wird.

Mit dem Querverkehr ist allerdings eine Kommunikationsbeziehung zwischen Slaves unterschiedlicher Mastersysteme möglich, indem z.B. der Master M1 des Mastersystems MS1 ein Request, also eine Sendeanforderung, an den dem Mastersystem MS1 zugeordneten Slave S2 sendet, woraufhin dieser seine Daten published, was dazu führt, daß sämtliche an das Bussystem angeschlossenen Kommunikationsteilnehmer und damit z.B. auch die Kommunikationsteilnehmer des Mastersystems MS2 diese Daten am Bus mithören können.

Ein passiver Kommunikationsteilnehmer, z.B. der Slave S3, der wie alle anderen Kommunikationsteilnehmer auch dieses Publishing des Slave S2 mithört, kann die Daten auswerten und erkennt anhand einer für diesen Slave S3 projektierten Filtertabelle, ob er die empfangenen Daten seiner Applikation zur Verfügung stellen soll. Insofern ist mit dem Querverkehr bereits eine Kommunikation von einem Mastersystem zu einem anderen Mastersystem möglich. Selbstverständlich ist mit dem Querverkehr nach wie vor auch eine Kommunikation zwischen Kommunikationsteilnehmern desselben Mastersystems, die normalerweise nicht direkt miteinander kommunizieren können, also z.B. zwischen zwei passiven Kommunikationsteilnehmern desselben Mastersystems möglich.

Nicht möglich ist dagegen bisher eine Kommunikation zwischen einem Master eines ersten Mastersystems und einem Kommunikationsteilnehmer eines weiteren Mastersystems. Weiter oben wurde bereits erläutert, daß z.B. eine direkte Kommunikationsbeziehung zwischen dem Master M3 des Mastersystems MS3 und dem Slave S2 des Mastersystems MS1 z.B. daran scheitert, daß ein Empfänger einer Nachricht von einem entfernten Mastersystem erkennt, daß diese Nachricht nicht zu den für das eigene Mastersystem projektierten Kommunikationsbeziehungen gehört, so daß die Nachricht abgewiesen wird.

Damit der Master M3 des Mastersystems MS3 mit einem Kommunikationsteilnehmer des Mastersystems MS1 z.B. dem Slave S1 kommunizieren kann, muß er die zu sendenden Daten in einem speziellen Format auf den Bus bringen, wobei sich insbesondere der Vorspann des abgesetzten Telegramms, der sogenannte Telegrammheader, durch Eintragungen auszeichnet, die die Filtertabelle des passiven Kommunikationsteilnehmers S1 passieren können. Das vom Master M3 gesendete Telegramm hat damit für den Empfänger, für den Kommunikationsteilnehmer S1 zumindest in bezug auf den Header das Aussehen, als ob es von einem anderen Kommunikationsteilnehmer, einem aktiven oder einem passiven Kommunikationsteilnehmer, im Rahmen des Querverkehrs gesendet worden wäre.

Mit der Erfindung wird also die an sich geschlossene Struktur der einzelnen Mastersysteme für Telegramme von Kommunikationsteilnehmern eines ersten Mastersystems an Kommunikationsteilnehmer eines anderen Mastersystems durchlässig.

Dies wird dadurch bewirkt, daß, wenn z.B. der Master M3 an den Slave S2 Daten absetzen will, dazu ein Telegramm generiert wird, das dadurch gekennzeichnet ist, daß als Zieladresse "an alle" eingetragen ist, und als Quelladresse die Adresse des Senders, in diesem Fall also die Adresse des Masters M3, eingetragen ist. Der Slave S2 erkennt das vom Master M3 empfangene Telegramm als ein Telegramm in einer Struktur, das er im Rahmen des Querverkehrs akzeptieren würde.

Alternativ kann vorgesehen sein, daß der Kommunikationsteilnehmer S2 das vom Master M3 abgesetzte Telegramm als gültiges Telegramm im Rahmen des Querverkehrs nur dann akzeptiert, wenn das Telegramm durch eine interne Kennung als "Response" kenntlich gemacht wird, so daß sich das vom Master M3 des Mastersystems MS3 abgesetzte Telegramm für den Slave S2 des Mastersystems MS1 als Telegramm im Rahmen eines Querverkehrs darstellt, das durch einen Stimulus, z.B. des eigenen Masters M1, ausgelöst sein könnte.

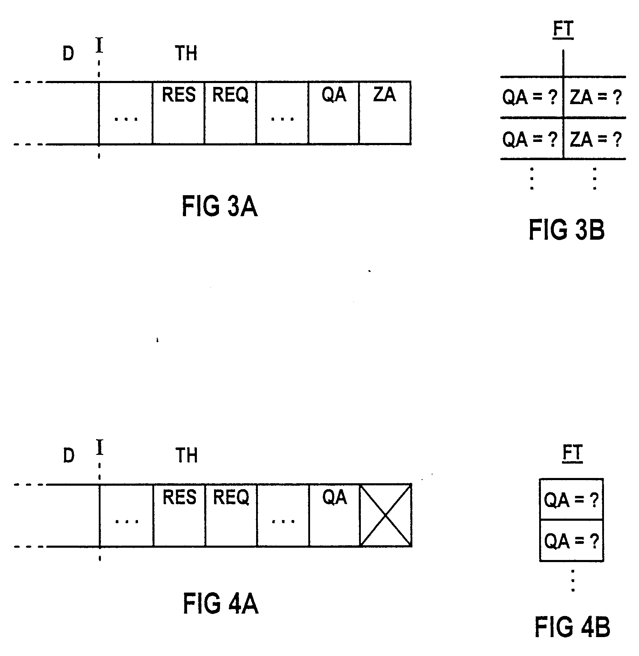

In den Figuren 3a, 3b bzw. 4a, 4b werden die Eintragungen insbesondere im Telegrammheader TH und die damit korrespondierenden Daten der Filtertabelle FT dargestellt. Gemäß FIG 3a umfaßt das Telegramm T einen Datenteil D und einen Kopfteil, den Telegrammheader TH. Der Telegrammheader TH umfaßt zumindest Positionen zur Eintragung der Quelladresse QA sowie der Zieladresse ZA. Die Zieladresse ZA kennzeichnet den Empfänger des Telegramms, die Quelladresse QA kennzeichnet den Sender des Telegramms. Darüber hinaus sind Positionen vorgesehen, die das Telegramm als Sendeanforderung oder Request REQ oder als Antwort auf eine Sendeanforderung, als Response RES kennzeichnen. Bezüglich der Kennzeichnung als Request REQ bzw. Response RES kann es vorgesehen sein, daß zwei getrennte Eintragungen im Telegrammheader vorgesehen sind, wobei z.B. die Eintragung einer Eins an der entsprechenden Position das Telegramm als Request kennzeichnet, wobei dann korrespondierend die andere Position natürlich mit Null belegt werden müßte. Alternativ kann es auch vorgesehen sein, daß nur eine Position im Telegrammheader vorgesehen ist, bei der ein erster Eintrag das Telegramm als Request und ein davon unterschiedlicher zweiter Eintrag das Telegramm als Response kennzeichnet.

FIG 3b zeigt die Filtertabelle FT, in der jeweils zusammengehörig Quell- und Zieladressen eintragbar sind, wobei die Quelladreß- und Zieladreßeintragung eines jeden empfangenen Telegramms mit den entsprechenden Eintragungen der Filtertabelle verglichen werden. Wird eine Übereinstimmung festgestellt, handelt es sich um ein Telegramm, das der Kommunikationsteilnehmer seinen Applikationen zur Verfügung stellt.

Das Telegramm T gemäß FIG 4a unterscheidet sich von dem Telegramm T der FIG 3a dadurch, daß keine explizite Zieladresse angegeben ist. Ohne explizite Zieladresse richtet sich das Telegramm quasi "an alle". Da die Zieladreßinformation im Telegramm T nicht mehr enthalten ist, reduziert sich die Filtertabelle gemäß FIG 4b entsprechend auf Daten bezüglich der Quelladresse. Es sei jedoch darauf hingewiesen, daß, wenn die Tabelle gemäß FIG 3B bzw. FIG 4B jeweils auf einen Eintrag bezüglich der Stationsnummer reduziert wird, diese Information ein Minimum darstellt. Gemäß einer Ausführungsform ist daher vorgesehen, daß die Tabelle jeweils zumindest Informationen bezüglich der Stationsnummer - zur Filterung im Hinblick auf die Quelladresse empfangender Daten - sowie darüber hinaus des Quell-SAPs - zur Filterung im Hinblick auf den beim Absenden der eingehenden Daten benutzten SAP - umfaßt.

Wenn, wie oben beschrieben vorgesehen ist, daß ein Telegramm als gültiges Telegramm im Rahmen des Querverkehrs nur dann akzeptiert wird, wenn das Telegramm durch eine interne Kennung als Response kenntlich gemacht ist, so ist zum Abprüfen dieser Kennung keine Filterung in Form einer Filtertabelle erforderlich, denn es handelt sich um eine einfache Wenn-Dann-Entscheidung, wonach das Telegramm akzeptiert wird, wenn die Response-Kennung erkannt wird, das Telegramm andernfalls abgewiesen wird.

Damit besteht also auch für aktive Kommunikationsteilnehmer entfernter Mastersysteme die Möglichkeit, Daten an Kommunikationsteilnehmer eines an sich nicht erreichbaren Mastersystems zu versenden. Voraussetzung dafür ist, daß diese Kommunikationsteilnehmer eine Filtertabelle in der oben beschriebenen Art aufweisen und zumindest den Header des abgesetzten Telegramms mit den gemäß der Projektierung in der Filtertabelle eingetragenen Daten vergleichen und bei Übereinstimmung die Daten entsprechend auswerten und in jeweiligen Applikationen zur Verfügung stellen.
Das neue Kommunikationsverfahren kann z.B. vorteilhaft eingesetzt werden bei Anwendungsfällen, bei denen es darum geht, auf sämtliche oder eine Gruppe von Systemkomponenten gleichzeitig oder quasi gleichzeitig einzuwirken, was z.B. insbesondere dann der Fall ist, wenn an einer Bedienstation die Not-Aus-Funktion ausgelöst werden soll.

Mit Hinblick auf FIG 2 würde z.B. die Not-Aus-Funktion vom Master M3 überwacht und sobald der Not-Aus ausgelöst wird, setzt der Master M3 ein Telegramm gemäß der vorliegenden Erfindung an die Kommunikationsteilnehmer der anderen Mastersysteme ab. Selbstverständlich ist der Anwendungsfall nicht auf die Not-Aus-Behandlung beschränkt, sondern ist z.B. auch vorteilhaft bei Auslösung eines "synchronen Stops" oder ähnlichen Aktionen einsetzbar, die einer gewissen Synchronizität bedürfen, oder bei der es um eine schnelle Kommunikation an sämtliche an das Bussystem angeschlossene Kommunikationsteilnehmer geht.

## Patentansprüche

1. Kommunikationsverfahren zum Einsatz in Verbindung mit einem dezentralen, bei der Automatisierung technischer Prozesse einsetzbaren Bussystem (B), an das mehrere Kommunikationsteilnehmer, darunter mindestens zwei Master (M1, M2) sowie mindestens ein Slave (S1), angeschlossen sind, wobei jeder Master (M1 M2) jeweils einem Mastersystem (MS1, MS2) zugeordnet ist, wobei das Mastersystem (MS1, MS2) keine physikalische Entsprechung hat, sondern lediglich die Möglich- bzw. Unmöglichkeit bestimmter Kommunikationsbeziehungen zwischen den an das Bussystem (B) angeschlossenen Kommunikationsteilnehmern (M1, M2, S1) festlegt, wobei zumindest der Slave (S1) jedes über den Bus (B) übermittelte Telegramm erkennt und zumindest bestimmte Daten des Telegrammkopfes auswertet und bei Übereinstimmung mit in einer Filtertabelle gespeicherten Eintragungen, die Daten des Telegramms seiner Applikation zur Verfügung stellt**, dadurch gekennzeichnet,**
daß ein Datentransfer zu einem Slaves (S1) eines ersten Mastersystems (MS1) ausgehend von einem Master (M2) eines entfernten Mastersystems (MS2) dadurch erfolgt, daß die Daten des Telegrammkopfes geeignet sind, die Filtertabelle des Slaves (S1) zu passieren.

2. Kommunikationsverfahren nach Anspruch 1, **dadurch gekennzeichnet,** daß das vom Master (M2) gesendete Telegramm sich für den Slave (S1) zumindest in Bezug auf den Telegrammkopf nicht von einem im Rahmen des sog. Querverkehrs versandten Telegramms eines Kommunikationsteilnehmers des gleichen Mastersystems (MS1) unterscheidet.

3. Kommunikationsverfahren nach Anspruch 2, **dadurch gekennzeichnet,** daß das vom Master (M2) gesendete Telegramm durch eine interne Kennung als "Response" kenntlich gemacht wird, so daß sich das vom Master (M3) des Mastersystems (MS3) abgesetzte Telegramm für den Slave (S1) des Mastersystems (MS1) als Querverkehrs-Telegramm darstellt, das durch einen Stimulus des eigenen Masters (M1) ausgelöst sein könnte.
